# NEUE EUROPÄISCHE PATENTSCHRIFT

(11) **EP 1 322 909 B2**
(45) Veröffentlichungstag und Bekanntmachung des Hinweises auf die Entscheidung über den Einspruch: **21.12.2016**
(45) Hinweis auf die Patenterteilung: 24.11.2010
(21) Anmeldenummer: 01969709.3
(22) Anmeldetag: 11.09.2001
(51) Int. Cl.: G01B 11/00, G01B 21/04

(54) **KOORDINATENMESSGERÄT**
CO-ORDINATE MEASURING DEVICE
APPAREIL DE MESURE DE COORDONNÉES

(30) Priorität: 28.09.2000 DE 10048096; 28.09.2000 DE 10048095; 29.06.2001 DE 10131038
(43) Veröffentlichungstag der Anmeldung: 02.07.2003
(73) Patentinhaber: Carl Zeiss Industrielle Messtechnik GmbH, 73447 Oberkochen (DE)
(72) Erfinder: KERN, Rudolf, 74340 Aalen (DE)
(74) Vertreter: Henckell, Carsten
(86) Internationale Anmeldenummer: PCT/EP2001/010470
(87) Internationale Veröffentlichungsnummer: WO 2002/027270

(56) Entgegenhaltungen:
- EP-A2- 1 010 967
- WO-A-97/18436
- DE-A- 19 639 780
- DE-A1- 2 416 212
- DE-A1- 3 711 644
- US-A- 4 637 119
- US-A- 4 888 877
- US-A- 5 214 426
- US-A- 5 501 096
- US-A- 5 794 356

## Beschreibung

Die Erfindung betrifft ein Koordinatenmessgerät mit einer Aufnahme zur automatisch auswechselbaren Befestigung einer Sensorik.

Ein derartiges Koordinatenmessgerät ist beispielsweise aus unserem US-Patent 4,888,877 und dem korrespondierenden Europäischen Patent 0 317 967 B1 bekannt. Am Messarm des hierin gezeigten Koordinatenmessgerätes ist eine sogenannte Dreh-Schwenkeinrichtung befestigt, an der wiederum ein Tastkopf befestigt ist. Die Dreh-Schwenkeinrichtung weist hierbei zwei nacheinander angeordnete, motorisch betriebene Drehgelenke mit zueinander senkrecht stehenden Drehachsen auf, über die der Tastkopf in unterschiedliche Drehstellungen bewegt werden kann. Der Tastkopf ist hierbei über eine entsprechende Aufnahme auswechselbar an der Dreh-Schwenkeinrichtung befestigt und kann deshalb während eines Meßablaufes automatisiert in einem dafür vorgesehenen Magazin abgelegt werden und gegen einen neuen Tastkopf getauscht werden.

Eine derartige Dreh-Schwenkeinrichtung hat in der Vergangenheit hervorragende Dienste geleistet und insbesondere das schnelle und unkomplizierte Vermessen von komplexen Geometrien, wie beispielsweise raumschrägen Bohrungen ermöglicht. Es gibt jedoch Meßaufgaben, die sich trotz der erhöhten Flexibilität nicht lösen lassen. Beispielsweise sind seit längerer Zeit optische Lasertriangulationstaster bekannt, die entlang einer Linie den Abstand zur Werkstückoberfläche messen können. Dazu wird ein Laserstrahl vorhangartig aufgefächert und unter einem Winkel durch eine Videokamera beobachtet. Trifft der vorhangartig aufgefächerte Laserstrahl auf einer Werkstückoberfläche auf, so wird hierdurch ein linienartiges Muster erzeugt, wobei aus der Lage des linienartigen Musters im Videobild der Abstand zur Werkstückoberfläche bestimmt werden kann. Um mit einem solchen Taster Kanten zu vermessen, sollte die Ebene des Laservorhanges senkrecht zur der Kante stehen. Dies ist jedoch nur möglich, wenn die Dreh-Schwenkeinrichtung um ein zusätzliches Drehgelenk erweitert wird. Dies würde jedoch bedeuten, daß speziell für diesen Tastkopf eine neue Dreh-Schwenkeinrichtung mit drei Drehgelenken vorgesehen werden muss, was erheblichen zusätzlichen Aufwand verursacht.

Hiervon ausgehend liegt unserer Erfindung die Aufgabe zugrunde ein Koordinatenmessgerät oben genannter Art anzugeben, mit dem unterschiedliche Meßaufgaben einfach bewältigt werden können.

Die Aufgabe wird durch die Merkmale des unabhängigen Anspruches 1 gelöst.

Der unabhängige Anspruch 8 zeigt ferner ein besonders angepaßtes Verfahren, mit dem der automatische Wechsel eines motorisch betriebenen Drehgelenkes oder der motorisch betriebenen Linearverstellung besonders vorteilhaft betrieben werden kann, wie wir dies weiter unten noch detailliert erläutern werden.

Der Grundgedanke unserer Erfindung ist hierbei darin zusehen, dass das motorisch betriebene Drehgelenk und/oder die motorisch betriebene Linearverstellung, über das der Tastkopf um eine Achse rotiert und/oder in einer Richtung verstellt werden kann automatisch auswechselbar am Koordinatenmessgerät befestigt werden kann.

Die Aufnahme zur auswechselbaren Befestigung der Sensorik kann, wie oben beschrieben, an einer Dreh-Schwenkeinrichtung vorgesehen sein. Natürlich kann die Aufnahme genauso gut unmittelbar am Meßarm angeordnet sein, der sich in den drei Koordinatenrichtungen relativ zum zu vermessenden Werkstück bewegen läßt.

Besonders vorteilhaft weist das Drehgelenk oder die Linearverstellung selber auch eine entsprechende Aufnahme zur Befestigung einer Sensorik auf. In diesem Fall können unterschiedliche Elemente der Sensorik nach dem Baukastenprinzip zusammengesetzt werden. Beispielsweise kann ein Drehgelenk an einer Aufnahme des Messarms befestigt werden. Am Drehgelenk wiederum kann über die hierin enthaltene Aufnahme eine Linearverstellung befestigt werden, wobei wiederum an der Aufnahme der Linearverstellung ein Tastkopf befestigt werden kann.

Da der Wechsel der Elemente automatisiert erfolgen kann, können derartige Elemente im Wechselmagazin vorgesehen werden und während eines Meßablaufes automatisiert zu einer geeigneten Sensorik zusammengesetzt werden.

Damit die einzelnen Elemente, also das Drehgelenk und/oder die Linearverstellung besonders vorteilhaft in den Meßablauf eingebunden werden können, sollte hierin eine Antriebsbaugruppe vorgesehen seien, die einen Antrieb, einen Winkelencoder bzw Linearencoder und einen Positionsregelkreis aufweist, sodass das Drehgelenk und/oder die Linearverstellung selbsttätig in eine gewünschte Position verfahren kann. Damit ist lediglich ein Datenaustausch zwischen der Steuer- und Auswerteeinheit des Koordinatenmessgerätes und dem Positionsregelkreis erforderlich, der vorzugsweise über einen digital arbeitenden Bus erfolgen sollte.

Der Positionsregelkreis der Antriebsbaugruppe sollte in die jeweilige Steuer- und Auswerteeinheit des Koordinatenmessgerätes eingebunden sein. Hierdurch wird es möglich das betreffende Drehgelenk und/oder die Linearverstellung als eigene Achsen zum Verfahren des Tastkopfes mitzubenutzen.

Vorteilhaft weist der Winkelencoder und/oder der Linearencoder der Antriebsbaugruppe sowohl einen Relativencoder, wie auch einen Absolutencoder auf. Hierdurch kann jederzeit der absolute Drehwinkel des Drehgelenkes bzw. die Stellung der Linearverstellung festgestellt werden. Insbesondere wird die Antriebsbaugruppe hierdurch so betreibbar, daß nach dem Einwechseln von zumindest Teilen der Sensorik in die Aufnahme automatisch eine Referenzstellung des Drehgelenkes und/oder der Linearverstellung ermittelt wird, die üblicherweise durch eine Referenzmarke eines Relativencoders festgelegt ist. Um diese Referenzstellung des Relativencoders automatisch zu ermitteln, kann das Drehgelenk bzw. die Linearverstellung unter Verwendung der Signale des Absolutencoders in der Nähe der Referenzstellung des Relativencoders positioniert werden. Hierdurch wird es möglich, daß völlig automatisiert nach dem Einwechseln des Drehgelenkes oder der Linearverstellung an der Aufnahme das Drehgelenk oder die Linearverstellung die Stellung überfährt, in der sich die Referenzmarke befindet, um hierdurch die Referenzposition automatisiert zu ermitteln. Für den Fall, dass es sich bei dem an der Aufnahme befestigten Element um ein Drehgelenk handelt, kann der Antrieb für das Drehgelenk besonders vorteilhaft ein Schneckengetriebe umfassen. Hierdurch wird ein weitgehend schwingungfreies Verdrehen des Drehgelenkes ermöglicht.

Das rotierbare Teil des Drehgelenkes sollte besonders vorteilhaft über zwei voneinander beabstandete Drehlager drehbar gelagert sein. Hierdurch ergibt sich eine besonders hohe Steifigkeit des Drehgelenkes auch quer zur Drehachse, was insbesondere dann sehr wichtig ist, wenn die Sensorik mehrere nacheinander angeordnete Elemente umfasst.

Weitere Vorteile und Weiterbildungen der Erfindung ergeben sich aus den nachfolgend anhand der Figuren beschriebenen Ausführungsbeispielen. Hierin zeigen:
- Figur 1:: ein Koordinatenmeßgerät mit einer erfindungsgemäßen Sensorik (5), die an einer Aufnahme einer Dreh-Schwenkeinheit (13) am Meßarm (4) des Koordinatenmeßgerätes befestigt ist
- Figur 2:: Sensorik (5) gemäß Figur 1 beim Abtasten einer Kalibrierkugel (12)
- Figur 3a:: eine Aufnahme (28a) zur auswechselbaren Befestigung eines Tastkopfes, eines Drehgelenkes oder einer Linearverstellung
- Figur 3b:: ein mit der Aufnahme (28a) zusammenwirkender Wechselteller (28b)
- Figur 4:: ein rein schematischer Aufbau eines zweiten Ausführungsbeispiels gemäß der Erfindung
- Figur 5:: schematische Darstellung der mechanischen Komponenten eines motorisch betriebenen Drehgelenkes
- Figur 6:: schematische Darstellung der mechanischen Komponenten einer motorisch betriebenen Linearverstellung
- Figur 7:: schematische Darstellung der elektronischen Komponenten der Antriebsbaugruppe eines Drehgelenkes gemäß Figur 5

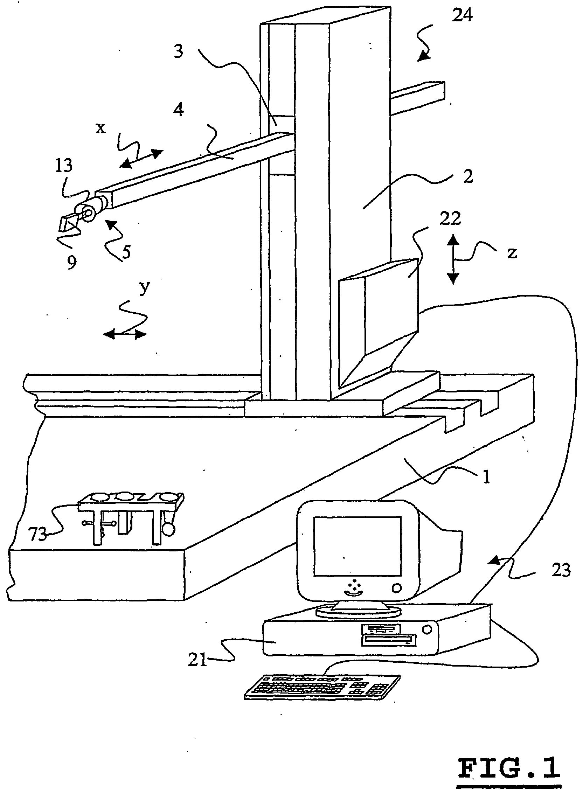

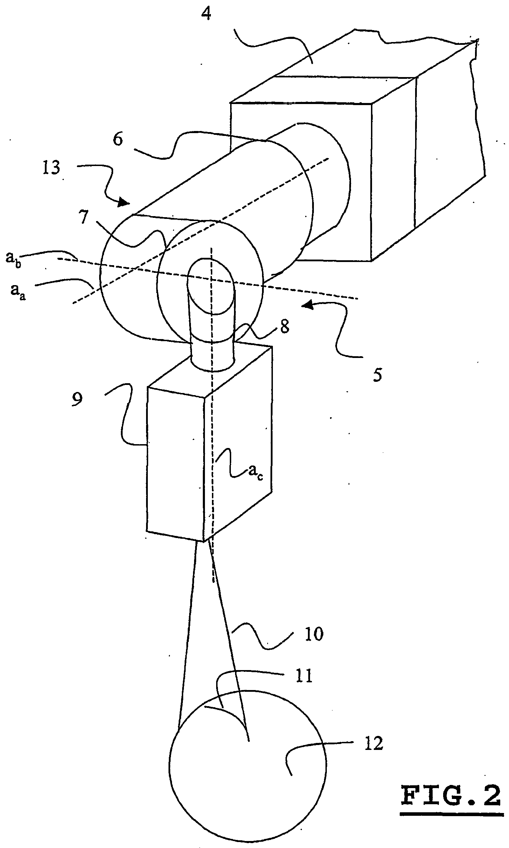

Figur 1 zeigt ein Koordinatenmeßgerät in sogenannter Ständerbauweise in einer perspektivischen Ansicht mit einer erfindungsgemäßen Sensorik (5), die einen optischen, zweidimensional messenden Tastkopf (9) und ein Drehgelenk (8) umfaßt, das an einer Aufnahme einer Dreh-Schwenkeinheit (13) mit zwei Drehgelenken (6,7) befestigt ist, wie dies noch weiter unten im Zusammenhang mit Figuren 2 erläutert werden wird.

Das Koordinatenmeßgerät umfaßt hierbei eine Mechanik (24) über die die Sensorik (5) in den Koordinatenrichtungen (X,Y,Z) verstellt werden kann. Diese Mechanik (24) umfaßt einen Ständer (2), der über Führungen in der mit dem Pfeil (y) bezeichneten Richtung auf dem Meßtisch (1) verfahren werden kann. An dem Ständer (2) ist in der mit dem Pfeil (z) bezeichneten Richtung ein Kreuzschieber (3) verschieblich gelagert, an dem wiederum in der mit dem Pfeil (x) beschriebenen Richtung der Meßarm (4) verschieblich gelagert ist.

Den einzelnen Führungen sind hierbei Maßstäbe mit entsprechenden Ableseköpfen zugeordnet, so daß in allen drei Koordinatenrichtungen (x,y,z) die jeweilige Position der Sensorik (5) bestimmt werden kann. Außerdem sind hier nicht näher zu sehende Antriebe vorgesehen, über die der Ständer (2), der Kreuzschieber (3) und der Meßarm (4) in den Koordinatenrichtungen (X,Y,Z) verfahren werden können. Als Steuer- und Auswerteeinheit (23) weist das Koordinatenmeßgerät hier beispielhaft einen Auswerterechner (21) auf, der der Erstellung von Meßabläufen und zur Auswertung der Meßdaten dient, sowie eine Steuerung (22) auf, die der Ansteuerung der Antriebe und der Aufnahme der Meßdaten dient. Auswerterechner (21) und Steuerung (22) der Steuer- und Auswerteeinheit (23) sind über einen Bus miteinander verbunden.

Des weiteren ist am Rande des Meßbereiches ein Magazin (73) mit unterschiedlichen Magazinplätzen vorgesehen, in dem unterschiedliche Sensoriken oder Einzelelemente zum Zusammenstellen einer Sensorik, wie Tastköpfe, Drehgelenke und/oder Linearverstellungen abliegen. Über die besagte noch weiter unten beschriebene Aufnahme an der Dreh-Schwenkeinheit (13) kann die Sensorik (5) in einem leeren Magazinplatz abgelegt werden und eine neue Sensorik aus einem anderen Magazinplatz aufgenommen werden. Alternativ kann auch aus einem neuen Magazinplatz nur ein Teilelement der neuen Sensorik, wie beispielsweise ein Drehgelenk oder eine Linearverstellung befestigt werden, wobei dieses Teilelement selber ebenfalls eine Aufnahme besitzt, über die ein weiteres Teilelement, wie beispielsweise ein Tastkopf befestigt wird.

Mit der Sensorik (5) können hierbei Meßpunkte auf einem in Figur 1 nicht näher gezeigten Werkstück aufgenommen werden, wie dies im Zusammenhang mit Figur 2 näher erläutert werden soll, die die Sensorik (5) ebenfalls in einer perspektivischen Darstellung zeigt.

Wie aus Figur 2 zu sehen ist, weist die Sensorik (5) neben dem optischen Tastkopf (9) zusätzlich ein Drehgelenk (8) auf, das in der Aufnahme einer Dreh-Schwenkeinheit (13) am Meßarm (4) des Koordinatenmeßgerätes befestigt ist und eine Drehachse (a_{c}.) definiert. Der optische Tastkopf (9) ist hierbei ein zweidimensional messender Lasertriangulationstaster, bei dem ein Laserstrahl vorhangartig zu einer Ebene (10) aufgefächert wird. Hierdurch ergibt sich auf dem Werkstück ein linienförmiges Muster (11), welches unter einem Winkel durch eine ebenfalls im optischen Tastkopf befindliche Videokamera beobachtet wird. Aus der Lage des linienförmigen Musters (11) im Videobild kann der Abstand zum Werkstück, hier einer Kalibrierkugel (12) bestimmt werden.

Die Dreh-Schwenkeinheit (13) weist hierbei zwei Drehgelenke (6,7) auf, die jeweils zwei weitere Drehachsen (aₐ,a_{b}) definieren, wobei die Drehachse (a_{b}) des Drehgelenkes (7) senkrecht auf die Drehachse (aₐ) des Drehgelenkes (6) steht und die Drehachse (a_{c}) des Drehgelenkes (8) der Sensorik (5) wiederum senkrecht auf die Drehachse (a_{b}) des Drehgelenkes (7) der Dreh-Schwenkeinheit steht. Somit kann der Tastkopf (9) über die Drehgelenke (6 und 7) der Dreh-Schwenkeinheit (13) beliebig im Raum verstellt werden. Außerdem kann über das Drehgelenk (8) der Sensorik (5) zusätzlich der Tastkopf (5) und mithin die Ebene (10) des aufgefächerten Laserstrahls verdreht werden, sodass die Ebene (10) immer senkrecht zu einer ggf. abzutastenden Kante eingestellt werden kann.

Die in diesem Ausführungsbeispiel verwendete Dreh-Schwenkeinheit (13) ist eine Dreh-Schwenkeinheit, wie sie beispielsweise in dem US-Patent 4,888,877 und dem korrespondierenden Europäischen Patent 0 317 967 gezeigt ist. Über die hieran befindliche Aufnahme ist die Sensorik (5) mit dem dritten Drehgelenk (8) und dem optischen Tastkopf (9) aufgenommen.

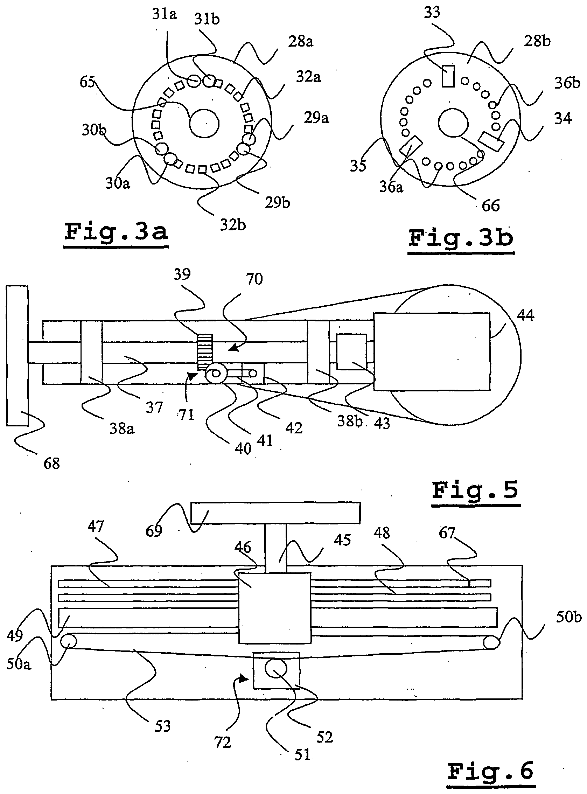

Eine solche Aufnahme (28a) soll im folgenden anhand der Figuren 3a und 3b erläutert werden. In Figur 3a ist die eigentliche Aufnahme (28a) zu sehen, wie sie in der Dreh-Schwenkeinrichtung (13) vorgesehen ist. Wie hieraus zu sehen, weist die Aufnahme drei Paare von Kugeln (29a,29b ; 30a,30b; 31a,31b) auf. Zwischen den Paaren von Kugeln befinden sich Kontaktflächen von denen rein beispielhaft zwei mit den Bezugszeichen (32a,32b) bezeichnet sind. Zentral in der Mitte befindet sich außerdem eine elektromagnetisch betriebene Spanneneinrichtung (65), mit der unterschiedliche Magnetfelder erzeugt werden können. Mit der Aufnahme (28a) wirkt ein am Drehgelenk (8) befestigter Teller (28b) zusammen, der drei Zylinder (33,34,35) aufweist. Neben den Zylindern (33,34,35) sind außerdem eine Vielzahl von federnden Kontaktstiften vorgesehen, von denen rein beispielhaft zwei Kontaktstifte mit den Bezugszeichen (36a,36b) bezeichnet wurden. Im Zentrum des Tellers (28b) befindet sich ein ferromagnetisches Bauteil (66). Zum Spannen des Tellers (28b), der sich beispielsweise an dem Drehgelenk (8) befindet, in die Aufnahme (28a) wird nun die Aufnahme (28a) in die Nähe des Tellers (28b) bewegt, also zum Magazin (73), in dem sich das Drehgelenk (8) mit dem Teller (28b) befindet, und über die elektromagnetisch betriebene Spanneneinrichtung (65) ein so großes magnetisches Feld erzeugt, sodass das ferromagnetische Bauteil (66) des Tellers (28b) angezogen wird und die Zylinder (33,34,35) auf dem jeweils zugeordneten Paar von Kugeln (29a,29b; 30a,30b; 31a,31b) zum Liegen kommt, sowie die Kontaktstifte (36a,36b) auf den zugehörigen Kontaktflächen (32a,32b) zum Liegen kommen.

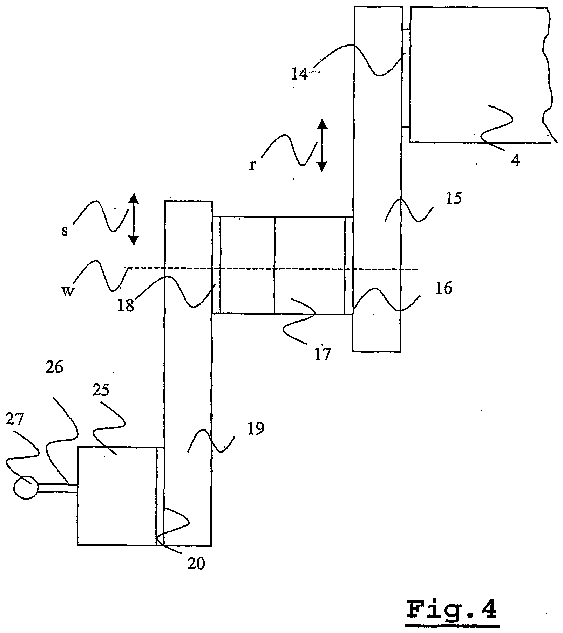

Wie bereits eingangs ausgeführt, ist die Erfindung aber keineswegs auf das im Zusammenhang mit den Figuren 1 und 2 beschriebene Ausführungsbeispiel beschränkt. Figur 4 zeigt ein vollkommen anderes Ausführungsbeispiel. Wie hierin zu sehen, umfasst die Sensorik hierin zwei Linearverstellungen (15,19), ein Drehgelenk (17) und einen Tastkopf (25) mit einem Taststift (26) und einer Tastkugel (27). Die Linearverstellung (15) ist über eine entsprechende Aufnahme (14) am Messarm (4) des Koordinatenmeßgerätes befestigt. Über die Linearverstellung (15) kann eine Aufnahme (16) in der mit dem Pfeif (r) bezeichneten Richtung verstellt werden. An der Aufnahme (16) wiederum ist ein Drehgelenk (17) auswechselbar befestigt, welches die Rotation einer Aufnahme (18) um die mit (w) bezeichnete Drehachse erlaubt. An der Aufnahme (18) wiederum ist eine Linearverstellung (19) befestigt, die wiederum eine Verstellung einer weiteren Aufnahme (20) in der mit dem Pfeil (s) bezeichneten Richtung erlaubt. An der Aufnahme (20) wiederum ist ein sogenannter schaltender Tastkopf (25) mit einem Taststift (26) und einer hieran befestigten Tastkugel (27) befestigt. Ein derartiger schaltender Tastkopf (25) arbeitet derart, dass bei Berührung der Tastkugel (27) mit dem Werkstück ein Signal erzeugt wird, aufgrund dessen alle Maßstabswerte ausgelesen werden und hieraus ein Meßpunkt berechnet wird.

Ein vorteilhafter Aufbau eines Drehgelenkes (8) gemäß Figur 1 und 2 soll nunmehr anhand von Figur 5 erläutert werden. Figur 5 zeigt hierbei rein schematisch ein Drehgelenk, bei dem die Abdeckung entfernt wurde, sodass die im Inneren befindlichen Bauteile gesehen werden können. Das zentrale Bauteil ist eine Welle (37), die hier über zwei voneinander beabstandete Drehlager (38a,38b) drehbar gelagert wird. Durch die Lagerung der Welle auf zwei voneinander beabstandeten Drehlagern (38a,38b) ergibt sich ein relativ steifer Aufbau des gesamten Drehgelenkes was zur Verringerung von Durchbiegungen führt und somit die Messgenauigkeit erhöht.

Um die Welle (37) rotieren zu können, ist ferner ein Antrieb (70) vorgesehen. Der Antrieb (70) umfasst einen Elektromotor (42), der über einen Riemen (41) ein Schneckengetriebe (71) antreibt, das ein Schneckenrad (40) und ein hiermit zusammenwirkendes Zahnrad (39) umfasst. Das Schneckengetriebe des besagten Antriebes (70) weist gegenüber bisher verwendeten Antrieben den Vorteil auf, dass Drehbewegungen weitgehend schwingungsfrei erzeugt werden können.

Die Welle (37) wiederum ist über einen Verbinder (43) mit einer Baugruppe (44) drehbar verbunden, in der sich ein erster und ein zweiter Winkelencoder befinden. Der erste Winkelencoder ist ein Relativencoder, der beispielsweise eine Inkrementalteilung aufweist, die von einem optischen Abtastkopf abgetastet wird, wobei aus der Anzahl der gezählten Inkremente ausgehend von einer Referenzposition, die durch eine Referenzmarke definiert ist, die genaue Position bestimmt wird. Der zweite Winkelencoder hingegen ist ein Absolutencoder, mit dem absolute Winkel gemessen werden können. Zur Feststellung der absoluten Winkel können beispielsweise digital codierte Informationen vorgesehen sein, die von einem entsprechenden Kopf abgetastet werden können und aus denen sich die absolute Winkellage feststellen läßt.

Wie bereits mehrfach beschrieben, umfasst der Relativencoder mit der Inkrementalteilung eine Referenzmarke, die nach dem Einwechseln des Drehgelenkes an einer entsprechenden Aufnahme überfahren werden muss, um die vordefinierte Referenzposition festzustellen. Da Drehgelenke üblicherweise nicht unendlich verdreht werden können, sondern für jede Drehrichtung einen Anschlag haben, musste bislang bei Drehgelenken, wie sie beispielsweise in der Dreh-Schwenkeinheit (13) vorgesehen sind, das Drehgelenk vom Bediener manuell so verfahren werden, daß hierbei die Referenzmarke überschritten wird und hierbei die Referenzposition festgestellt werden kann. Durch den Absolutencoder ist es nunmehr möglich vollkommen automatisiert das Drehgelenk so zu positionieren, dass sich der Relativencoder in der Nähe der Referenzmarke befindet. Von hier aus kann dann ein automatischer Suchlauf gestartet werden, bei dem die Referenzmarke überstrichen wird und hierdurch automatisiert die Referenzposition ermittelt wird.

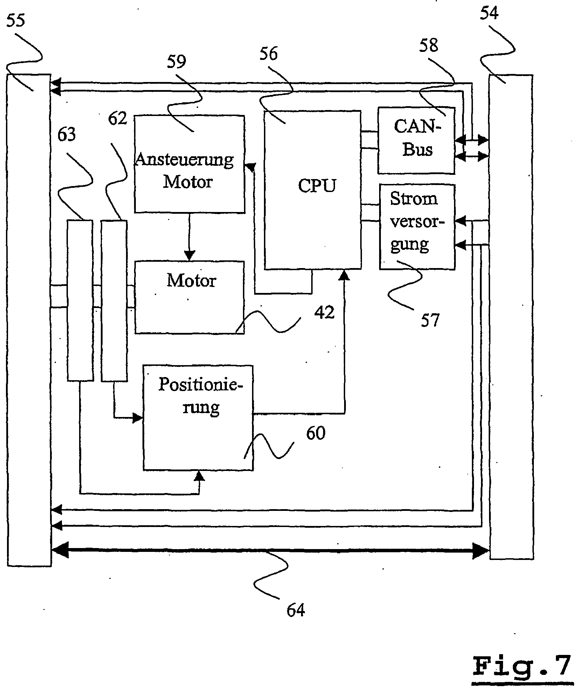

Neben dem besagten Relativencoder und dem Absolutencoder befindet sich in der Baugruppe (44) außerdem ein Positionsregler, der mit den Winkelencodem und dem Antrieb in Verbindung steht und hierdurch definierte Drehwinkelstellungen des Drehgelenkes einstellen kann, wie wir dies weiter unten anhand von Figur 7 erläutert werden.

Figur 6 zeigt rein schematisch den Aufbau einer Linearverstellung (15 oder 19) gemäß Figur 4. Auch die hier gezeigte Linearverstellung ist ohne Gehäuse gezeigt, sodass die hierin befindlichen Bauteile zu sehen sind. Die Linearverstellung weist einen Schlitten (46) auf, der über eine Luftlagerung entlang einer Führung (49) beweglich gelagert ist. An dem Schlitten (46) ist ein Ausleger (45) befestigt, an dem wiederum eine Aufnahme (69) zur Befestigung eines Tastkopfes oder eines Drehgelenkes oder einer weiteren Linearverstellung befestigt ist. Der Schlitten (46) kann über einen Antrieb (72) entlang der Führung (49) verfahren werden. Der Antrieb umfasst einen Elektromotor (52) von dem zwei untereinander liegende Räder (nur das Rad 51 ist zu sehen) angetrieben werden können. Die Räder treiben hierbei einen Riemen (53) an, der über Umlenkrollen (50a, 50b) geführt ist und mit dem Schlitten (46) verbunden ist. Ein Ende des Riemens (53) ist hierbei am ersten Rad (51) befestigt, während das andere Ende des Riemens (53) an dem darunter liegenden Rad befestigt ist. Zusätzlich ist in Analogie zum Drehgelenk gemäß Figur 5, ein Linearencoder (47) vorgesehen, der als Relativencoder arbeitet und dazu beispielsweise einen Maßstab mit einer Inkrementalteilung und Referenzmarke (67), sowie einen Abtastkopf zum Abtasten der Inkrementalteilung und der Referenzmarke umfaßt. Des weiteren ist ein zweiter Linearencoder (48) vorgesehen, der als Absolutencoder ausgebildet ist und über den sich, wenn auch nur grob, absolut die Entfernung des Schlittens (46) von einer Refernzposition bestimmen läßt. Dazu weist der Linearencoder einen Maßstab auf, auf dem sich digital codiert Entfernungsinformationen befinden und einen Abtastkopf, über den die Entfernungsinformationen ausgelesen werden können. Des weiteren umfasst die Linearverstellung ebenfalls in Analogie zum Drehgelenk gemäß Figur 5 einen Positionsregler, der sowohl mit dem Elektromotor (52) wie auch mit den Linearencodern (47 und 48) in Verbindung steht und mithin eine definierte Positionen des Schlittens (46) einstellen kann.

Die Ermittlung der Referenzposition erfolgt hierbei ebenfalls vollkommen analog zum Drehgelenk gemäß Figur 5,indem der Positionsregler den Schlitten (46) zunächst gemäß den Messwerten des Absolutencoders (48) in der Nähe der Referenzmarke (67) positioniert und danach den Schlitten automatisiert über die Referenzmarke (67) hinweg führt um hierdurch die Referenzposition bestimmen zu können.

Zur Verdeutlichung des elektronischen Aufbaus soll außerdem anhand von Figur 7 für das Drehgelenk gemäß Figur 5 die wesentlichen Komponenten erläutert werden. Mit dem Bezugszeichen (54) sollen hierbei rein schematisch die Kontaktstifte (36a,36b etc.) eines Wechseltellers (28b) gemäß Figur 3b dargestellt werden. Wie hierin zu sehen, sind zwei der Kontaktstifte für die Stromversorgung (57) vorgesehen, während zwei weitere Kontaktstifte zur digitalen Kommunikation über beispielsweise einen CAN-Bus (58) mit der Steuer- und Auswerteeinheit (23) des Koordinatenmessgerätes vorgesehen sind. Natürlich kann die Kommunikation alternativ auch über die beiden Leitungen der Stromversorgung erfolgen, wenn dies gewünscht ist. Alle anderen Kontaktstifte, die hier zusammengefasst mit dem Bezugszeichen (64) bezeichnet sind, stehen zur Verbindung des Tastkopfes mit der Steuer-und Auswerteeinheit des Koordinatenmessgerätes zur Verfügung.

Als zentrales Bauteil weist die Antriebsbaugruppe hierbei einen Mikroprozessor (56) auf, der in diesem Ausführungsbeispiel u. a. als Positionsregler fungiert und zusätzlich die Kommunikation mit der Steuer- und Auswerteeinheit (23) des Koordinatenmessgerätes steuert. Zur Regelung der Position des Drehgelenkes ist, wie bereits oben beschrieben, ein Motor (42) vorgesehen, der über eine Ansteuerung (59) angesteuert wird, die wiederum mit dem Mikroprozessor (56) in Verbindung steht. Aufgrund des durch den Motor (42) eingestellten Drehwinkels liefert der Winkelencoder (62) Signale an eine Einheit "Positionierung" (60), die hieraus den aktuellen Drehwinkel ermittelt und diesen an den Mikroprozessor (56) zurückgemeldet. Über die beschriebene Schaltung ist es nunmehr möglich, dass die Steuer- und Auswerteeinheit (23) des Koordinatenmessgerätes über den CAN-Bus (58) Digital eine anzusteuernde Drehstellung an den Mikroprozessor (56) übermittelt, wobei der Mikroprozessor (56) dann auf Basis des Signals der Einheit "Positionierung" (60) die Motoransteuerung (59) und den hiermit verbundenen Motor (42) derart ansteuert, dass der vorgegebene Drehwinkel eingestellt wird.

Des weiteren ist, wie, bereits oben ausgeführt, ein zweiter Winkelencoder (63) vorgesehen, der als Absolutencoder ausgeführt ist und, wenn auch nur ungenau, den absoluten Drehwinkel des Drehgelenkes mißt, wobei die Baugruppe "Positionierung" (60) hieraus den Drehwinkel bestimmt und diesen ebenfalls an den Mikroprozessor (56) meldet. Über dieses Signal kann, wie bereits oben detailliert ausgeführt, automatisiert nach dem Einwechseln des Drehgelenkes an der Aufnahme des Koordinatenmessgerätes die Referenzstellung des Winkelencoders (62) ermittelt werden, indem der Mikroprozessor (56) auf Basis der gemessenen Winkelstellung des Absolutencoders (63) den Motor (42) derart ansteuert, daß der Winkelencoder (62) in die Nähe der Referenzmarke verfahren wird und danach die Referenzmarke überfahren wird, um die Referenzposition zu ermitteln.

Selbstverständlich ist die Erfindung in keiner Weise auf die gezeigten Ausführungsbeispiele beschränkt. Beispielsweise kann an Stelle des gezeigten Ständermessgerätes auch jedes beliebige andere Koordinatenmessgerät verwendet werden. Es können beispielsweise Portalmessgeräte, Brückenmessgeräte, Roboterarme mit Drehgelenken oder Koordinatenmessgeräte verwendet werden, bei denen der Meßtisch in einer oder mehreren Koordinaten verschoben werden kann. Auch bei dem bezeichneten Tastkopf kann es sich um unterschiedlichste Varianten handeln. Es kann sich beispielsweise um optische Tastköpfe, wie beispielsweise Lasertriangulationstaster oder Videotastköpfe oder auch um berührende Tastköpfe, wie beispielsweise schaltende Tastköpfe oder messende Tastköpfe handeln. Auch die Aufnahme zur auswechselbaren Befestigung kann selbstverständlich völlig unterschiedlich ausgestaltet sein. Beispielsweise kann an Stelle der elektromagnetischen Spanneinrichtung auch ein mechanischer Greifer oder ein Vakuumsaugnapf verwendet werden. Auch an Stelle des hier gezeigten Dreipunktlagers könnte beispielsweise ein anders ausgestaltetes Lager verwendet werden. Beispielsweise könnten an Stelle der drei paarweise angeordneten Kugeln auch ein erstes Element mit einer kegelförmigen Aussparung, ein zweites Element mit einer Dreieckförmigen Aussparung und ein drittes Element mit einer Ebene vorgesehen werden. Werden anstelle der drei Zylinder des zugehörigen Tellers drei Kugeln vorgesehen, so sind diese hierdurch ebenfalls statisch eindeutig bestimmt. An Stelle der Kontakte könnten beispielsweise kontaktlose Verbindungen verwendet werden. Die Steuer- und Auswerteeinheit könnte beispielsweise in einem Rechner zusammengefaßt sein. Auch die Antriebsbaugruppe im Drehgelenk oder im Linearantrieb könnte unterschiedlich sein. Beispielsweise könnte anstelle anstelle des Mikroprozessors ein analoger Positionsregler verwendet werden. Anstelle der gezeigten Winkelencoder bzw. Linearencoder, bei denen optisch die Informationen abgetastet werden könnten auch Encoder mit Magnetischen Informationen verwendet werden.

## Patentansprüche

1. Koordinatenmessgerät mit einer Sensorik (5) und mit einer Aufnahme (28a) zur automatisch auswechselbaren Befestigung dieser Sensorik (5), wobei
**a)** die Sensorik neben einem Tastkopf (9) zusätzlich wenigstens ein motorisch betriebenes Drehgelenk (8,17) umfasst, worüber der Tastkopf um eine Achse (a_{c}, w) rotiert werden kann, wobei das Drehgelenk (8) eine Antriebsbaugruppe mit einem Antrieb (70), einem Winkelencoder (62,63) und einem Positionsregler (56) aufweist und wobei der Datenaustausch zwischen der Steuer- und Auswerteeinheit (23) des Koordinatenmessgerätes und dem Positionsregler (56) über einen digital arbeitenden Bus (58) erfolgt **oder**
**b)** die Sensorik neben einem Tastkopf (9) zusätzlich wenigstens eine motorisch betriebene Linearverstellung (15,19) umfasst, worüber der Tastkopf in einer Richtung (r, s) verstellt werden kann, wobei die Linearverstellung (15) eine Antriebsbaugruppe mit einem Antrieb (72), einem Linearencoder (47,48) und einem Positionsregler aufweist und wobei der Datenaustausch zwischen der Steuer- und Auswerteeinheit (23) des Koordinatenmessgerätes und dem Positionsregler über einen digital arbeitenden Bus erfolgt **oder**
**c)** die Sensorik neben einem Tastkopf (9) zusätzlich wenigstens ein motorisch betriebenes Drehgelenk (8,17) umfasst, worüber der Tastkopf um eine Achse (a_{c}, w) rotiert werden kann und eine motorisch betriebene Linearverstellung (15,19) umfasst, worüber der Tastkopf in einer Richtung (r, s) verstellt werden kann, wobei das Drehgelenk (8) eine Antriebsbaugruppe mit einem Antrieb (70), einem Winkelencoder (62,63) und einem Positionsregler (56) aufweist und wobei der Datenaustausch zwischen der Steuer- und Auswerteeinheit (23) des Koordinatenmessgerätes und dem Positionsregler (56) über einen digital arbeitenden Bus (58) erfolgt und/oder die Linearverstellung (15) eine Antriebsbaugruppe mit einem Antrieb (72), einem Linearencoder (47,48) und einem Positionsregler aufweist und wobei der Datenaustausch zwischen der Steuer- und Auswerteeinheit (23) des Koordinatenmessgerätes und dem Positionsregler über einen digital arbeitenden Bus erfolgt.

2. Koordinatenmessgerät nach Anspruch 1, **dadurch gekennzeichnet, dass** der Winkelencoder und/oder der Linearencoder der Antriebsbaugruppe bzw. der Antriebsbaugruppen, sowohl einen Relativencoder (62,47), wie auch einen Absolutencoder (63,48) aufweist bzw. aufweisen.

3. Koordinatenmessgerät nach Anspruch 2, **dadurch gekennzeichnet, dass** die Antriebsbaugruppe so betreibbar ist, dass nach dem Einwechseln von zumindest Teilen der Sensorik (5) in die Aufnahme automatisch eine Referenzstellung des Drehgelenkes und/oder der Linearverstellung ermittelt wird.

4. Koordinatenmessgerät nach Anspruch 3, **dadurch gekennzeichnet, dass** die Antriebsbaugruppe so betreibbar ist, dass zum Auffinden der Referenzstellung (67) das Drehgelenk automatisch unter Verwendung der Signale des Absolutencoders (63) in der Nähe einer Referenzmarke des Relativencoders positioniert wird und/oder die Linearverstellung automatisch unter Verwendung der Signale des Absolutencoders (48) in der Nähe einer Referenzmarke des Relativencoders positioniert wird.

5. Koordinatenmessgerät nach Anspruch 4, **dadurch gekennzeichnet, dass** die Antriebsbaugruppe ferner so betreibbar ist, dass zum Ermitteln der Referenzstellung nach dem Positionieren in der Nähe der Referenzmarke in einem Suchlauf automatisch die Referenzmarke überfahren wird.

6. Koordinatenmessgerät nach einem der Ansprüche 1 bis 5, **dadurch gekennzeichnet, dass** der Antrieb (70) für das Drehgelenk ein Schneckengetriebe (71) umfasst.

7. Koordinatenmessgerät nach einem der Ansprüche 1 bis 6, bei dem die Sensorik (5) ein Drehgelenk umfasst, **dadurch gekennzeichnet, dass** der rotierbare Teil (37,68) des Drehgelenkes über zwei voneinander beabstandete Drehlager (38a,38b) drehbar gelagert ist.

8. Verfahren zur Ermittlung der durch eine Referenzmarke eines Relativencoders festgelegten Referenzstellung eines Drehgelenkes oder einer Linearverstellung mit folgenden Verfahrensschritten:
- bewegen des Drehgelenkes oder der Linearverstellung in eine erste vordefinierte Position entsprechend den Signalen eines Absolutencoders in der Nähe der Referenzmarke des Relativencoders
- bewegen des Drehgelenkes oder der Linearverstellung von dieser Position aus in Richtung der Referenzmarke und überstreichen der Referenzmarke
- vermitteln der Referenzstellung beim Überstreichen der Referenzmarke.

## Claims

1. Coordinate measuring machine having a sensor system (5) and having a holder (28a) for the automatically exchangeable fastening of said sensor system (5), wherein
**a)** apart from a probe head (9) the sensor system additionally comprises at least a motor-driven rotary joint (8, 17) by means of which the probe head can be rotated about an axis (a_{c}, w), wherein the rotary joint (8) has a drive assembly with a drive (70), an angle encoder (62, 63) and a position controller (56), and wherein the data exchange between the control and evaluation unit (23) of the coordinate measuring machine and the position controller (56) is performed via a digitally operating bus (58) or
**b)** apart from a probe head (9) the sensor system additionally comprises at least a motor-driven linear adjuster (15, 19), by means of which the probe head can be adjusted in a direction (r, s), wherein the linear adjuster (15) has a drive assembly with a drive (72), a linear encoder (47, 48) and a position controller and wherein the data exchange between the control and evaluation unit (23) of the coordinate measuring machine and the position controller is performed via a digitally operating bus or
**c)** apart from a probe head (9) the sensor system additionally comprises at least a motor-driven rotary joint (8, 17), by means of which the probe head can be rotated about an axis (a_{c}, w), and a motor-driven linear adjuster (15, 19), by means of which the probe head can be adjusted in a direction (r, s), wherein the rotary joint (8) has a drive assembly with a drive (70), an angle encoder (62, 63) and a position controller (56) and wherein the data exchange between the control and evaluation unit (23) of the coordinate measuring machine and the position controller (56) is performed via a digitally operating bus (58) and/or the linear adjuster (15) has a drive assembly with a drive (72), a linear encoder (47, 48) and a position controller and wherein the data exchange between the control and evaluation unit (23) of the coordinate measuring machine and the position controller is performed via a digitally operating bus.

2. Coordinate measuring machine according to Claim 1, **characterized in that** the angle encoder and/or the linear encoder of the drive assembly or drive assemblies has or have both a relative encoder (62, 47) and an absolute encoder (63, 48).

3. Coordinate measuring machine according to Claim 2, **characterized in that** the drive assembly can be operated such that after the loading of at least parts of the sensor system (5) into the holder a reference position of the rotary joint and/or of the linear adjuster are/is determined automatically.

4. Coordinate measuring machine according to Claim 3, **characterized in that** the drive assembly can be operated such that for the purpose of finding the reference position (67) the rotary joint is automatically positioned in the vicinity of a reference mark of the relative encoder by using the signals of the absolute encoder (63) and/or the linear adjuster is automatically positioned in the vicinity of a reference mark of the relative encoder by using the signals of the absolute encoder (48).

5. Coordinate measuring machine according to Claim 4, **characterized in that** the drive assembly can, furthermore, be operated such that after the positioning in the vicinity of the reference mark the reference mark is automatically driven over in a search cycle in order to determine the reference position.

6. Coordinate measuring machine according to one of Claims 1 to 5, **characterized in that** the drive (70) for the rotary joint comprises a worm gear drive (71).

7. Coordinate measuring machine according to one of Claims 1 to 6 in which the sensor system (5) comprises a rotary joint, **characterized in that** the rotatable part (37, 68) of the rotary joint is supported such that it can rotate via two rotary bearings (38a, 38b) spaced apart from one another.

8. Method for determining the reference position, defined by a reference mark of a relative encoder, of a rotary joint or of a linear adjuster, having the following method steps:
- moving the rotary joint or the linear adjuster into a first predefined position corresponding to the signals of an absolute encoder in the vicinity of the reference mark of the relative encoder,
- moving the rotary joint or the linear adjuster from this position in the direction of the reference mark, and scanning the reference mark, and
- determining the reference position upon scanning the reference mark.

## Revendications

1. Appareil de mesure de coordonnées comprenant un dispositif de détection (5) et comprenant un attachement (28a) pour la fixation interchangeable automatique de ce dispositif de détection (5), dans lequel
a) le dispositif de détection, outre une tête de palpage (9), comprend en plus au moins une articulation tournante (8, 17) à entraînement motorisé, par le biais de laquelle la tête de palpage peut exécuter une rotation autour d'un axe (a_{c}, w), l'articulation tournante (8) présentant un sous-ensemble d'entraînement muni d'un mécanisme d'entraînement (70), d'un codeur d'angle (62, 63) et d'un régulateur de position (56) et l'échange de données entre l'unité de contrôle et d'interprétation (23) de l'appareil de mesure de coordonnées et le régulateur de position (56) s'effectuant par le biais d'un bus (58) à fonctionnement numérique ou
b) le dispositif de détection, outre une tête de palpage (9), comprend en plus au moins un positionnement linéaire (15, 19) à entraînement motorisé, par le biais duquel la tête de palpage peut être déplacée dans une direction (r, s), le positionnement linéaire (15) présentant un sous-ensemble d'entraînement muni d'un mécanisme d'entraînement (72), d'un codeur linéaire (47, 48) et d'un régulateur de position et l'échange de données entre l'unité de contrôle et d'interprétation (23) de l'appareil de mesure de coordonnées et le régulateur de position s'effectuant par le biais d'un bus à fonctionnement numérique ou
c) le dispositif de détection, outre une tête de palpage (9), comprend en plus au moins une articulation tournante (8, 17) à entraînement motorisé, par le biais de laquelle la tête de palpage peut exécuter une rotation autour d'un axe (a_{c}, w) et comprend un positionnement linéaire (15, 19) à entraînement motorisé, par le biais duquel la tête de palpage peut être déplacée dans une direction (r, s), l'articulation tournante (8) présentant un sous-ensemble d'entraînement muni d'un mécanisme d'entraînement (70), d'un codeur d'angle (62, 63) et d'un régulateur de position (56) et l'échange de données entre l'unité de contrôle et d'interprétation (23) de l'appareil de mesure de coordonnées et le régulateur de position (56) s'effectuant par le biais d'un bus (58) à fonctionnement numérique et/ou
le positionnement linéaire (15) présentant un sous-ensemble d'entraînement muni d'un mécanisme d'entraînement (72), d'un codeur linéaire (47, 48) et d'un régulateur de position et l'échange de données entre l'unité de contrôle et d'interprétation (23) de l'appareil de mesure de coordonnées et le régulateur de position s'effectuant par le biais d'un bus à fonctionnement numérique.

2. Appareil de mesure de coordonnées selon la revendication 1, **caractérisé en ce que** le codeur d'angle et/ou le codeur linéaire du sous-ensemble d'entraînement ou des sous-ensembles d'entraînement présente ou présentent à la fois un codeur relatif (62, 47) et un codeur absolu (63, 48).

3. Appareil de mesure de coordonnées selon la revendication 2, **caractérisé en ce que** le sous-ensemble d'entraînement peut être utilisé de telle sorte qu'après un changement d'au moins des parties du dispositif de détection (5) dans l'attachement, une position de référence de l'articulation tournante et/ou du positionnement linéaire est déterminée automatiquement.

4. Appareil de mesure de coordonnées selon la revendication 3, **caractérisé en ce que** le sous-ensemble d'entraînement peut être utilisé de telle sorte que pour trouver la position de référence (67), l'articulation tournante est positionnée automatiquement à proximité d'un repère de référence du codeur relatif en utilisant les signaux du codeur absolu (63) et/ou le positionnement linéaire est positionné automatiquement à proximité d'un repère de référence du codeur relatif en utilisant les signaux du codeur absolu (48).

5. Appareil de mesure de coordonnées selon la revendication 4, **caractérisé en ce que** le sous-ensemble d'entraînement peut en outre être utilisé de telle sorte que pour déterminer la position de référence, le repère de référence est automatiquement dépassé au cours d'une course de recherche après le positionnement à proximité du repère de référence.

6. Appareil de mesure de coordonnées selon l'une des revendications 1 à 5, **caractérisé en ce que** le mécanisme d'entraînement (70) comprend un engrenage à vis sans fin (71) pour l'articulation tournante.

7. Appareil de mesure de coordonnées selon l'une des revendications 1 à 6, avec lequel le dispositif de détection (5) comprend une articulation tournante, **caractérisé en ce que** la partie rotative (37, 68) de l'articulation tournante est supportée en rotation par le biais de deux paliers rotatifs (38a, 38b) espacés l'un de l'autre.

8. Procédé de détermination de la position de référence, définie par un repère de référence d'un codeur relatif, d'une articulation tournante ou d'un positionnement linéaire comprenant les étapes suivantes :
- déplacement de l'articulation tournante ou du positionnement linéaire dans une position prédéfinie conformément aux signaux d'un codeur absolu à proximité du repère de référence du codeur relatif,
- déplacement de l'articulation tournante ou du positionnement linéaire depuis cette position en direction du repère de référence et dépassement du repère de référence
- détermination de la position de référence au moment du dépassement du repère de référence.
